# EUROPEAN PATENT SPECIFICATION

(11) **EP 3 945 175 B1**
(45) Date of publication and mention of the grant of the patent: **30.08.2023**
(21) Application number: 21020375.8
(22) Date of filing: 20.07.2021
(51) Int. Cl.: B32B 3/06, B32B 3/08, B32B 3/20, B32B 3/26, B32B 3/28, B32B 7/12, B32B 15/04, B32B 15/20, B61D 27/00, B32B 3/12, E04C 2/36, E04C 2/52

(54) **PANEL**
PANEEL
PANNEAU

(30) Priority: 30.07.2020 IT 202000018520
(43) Date of publication of application: 02.02.2022
(73) Proprietor: Z LAB s.r.l., 37053 Cerea (VR) (IT)
(72) Inventor: Scofano, Antonio, 37053 Cerea (VR) (IT)

(56) References cited:
- EP-A1- 1 704 993
- DE-A1- 2 610 108
- FR-A1- 2 953 635
- US-A1- 2013 142 624
- US-A1- 2019 337 632
- US-B1- 6 203 656

## Description

### TECHNICAL FIELD

The present invention relates to panels for realizing walls, ceilings and floors. In particular, the present invention relates to permeable panels, thus breathable to air, for performing multiple functions such as refrigeration/heating, data connection and sound absorption.

### BACKGROUND ART

Several examples of panels for realizing walls or ceilings of buildings' rooms or mobile structures are known in the state of the art. For example, modular panels are known in the civil construction sector to create counter-walls or false ceilings, but modular panels are also known to create the internal envelope of a vehicle for transporting people, such as trains, airplanes or buses.

These panels can be sound-absorbing and provide additional functions such as lighting and ventilation.

An example of a sound-absorbing modular panel is provided by document US20190337632A1, which describes a sound-absorbing panel equipped with a honeycomb structure topped by a perforated panel, to allow sound entering through the holes in the panel. This solution allows sound absorption but does not allow air to circulate through the panel to diffuse or suck air into the surrounding environment. Another solution that provides sound-absorbing properties but cannot allow an air conditioning of the ambient that enclosed is disclosed in the document US20130142624A1.

An example of a sound-absorbing and illuminating modular panel is provided by document US9194124B2, in which a panel having a sound-absorbing and an illuminating layer is described. The sound-absorbing layer has a perforated plate and, behind it, there is a plate made with an optical film to allow the passage of the light produced by the illuminating sub-layer.

There are also panels which, in addition to being sound-absorbing, comprise a refrigeration or heating system provided by means of Peltier cells, such as the one described in document WO2015155488A1. This solution comprises Peltier cells embedded inside a layer of sound absorbing material to radiate/absorb heat through a perforated plate. This solution does not allow any passage of airthrough the panel, since all the holes in the sheet are plugged by the sound-absorbing material or by the Peltier cells, therefore an air recirculation between the space and the outside is not possible.

Finally, a sound-absorbing panel capable of purifying the air is known from the document US20090183943A1. This document describes a panel having a micro-perforated sound-absorbing plate. Air purified by UV lamps in the panel can flow through the holes in the plate. The sound-absorbing panel can also be heated or cooled, and the lamps are arranged behind the micro-perforated panel. This solution does not allow to blow and, at the same time, to suck air from the space through the panel. In this patent, the air exiting the panel is purified by UV lamps present in the panel, but the exhausted air from the space is not sucked in by the panel. Furthermore, the panel is neither modular nor structural, thus capable of withstanding high loads.

Therefore, there are no known solutions suitable for providing a modular panel, thus composed of units that can be added, eliminated or modified without affecting the rest of the structure. Likewise, a modular panel with structural properties, that is capable of withstanding consistent axial and longitudinal loads and having transpiring and sound-absorbing properties, is not known. In particular, capable of circulating air inside it both at the outlet and at the inlet for sucking and pumping air into the environment enclosed by the panel.

### SUMMARY

A first scope of the present invention is that of providing a modular panel for realizing an enclosure of a space for solving the inconvenients of the background art. Said modular panel comprises an inner sheet, facing the space, comprising a plurality of holes; an outer sheet arranged on the opposite face of the panel, with respect to the inner sheet; a first septum arranged between the inner and outer sheets. Wherein said outer sheet and said first septum are coupled each other through a first permeable structural layer, so to realize a first air channel between the outer sheet and the first septum, and said inner sheet and said first septum are coupled each other through a second permeable structural layer so to realize a second air channel between the inner sheet and the first septum. Said first air channel is isolated from the second air channel and said second air channel is fluidly connected to the space through the holes of the inner sheet.

The modular panel also comprises a first transversal channel that fluidly connects the first air channel and the space through the holes of the inner sheet. This modular panel comprises two parallel channels independent and separated from each other that allow sucking and pumping air in the space for creating an air circulation. This panel also allows to absorb sound and noises coming from the space through the holes of the inner sheet. Moreover, said panel having a structural permeable core, allows to withstand loads that are parallel or orthogonal to the panel. The modular panel is also capable of interacting with other similar panels to realize the enclosure of a space, thus the walls, the ceiling or the floor of an ambient of a building or mobile vehicle.

The modular panel can also comprise first pumping means configured to circulate air to or from the space through the first air channel and the first transversal channel, and second pumping means configured to circulate air to or from the space through the second air channel. The first pumping means can be configured to circulate the air in an opposite direction with respect to said second pumping means, so to create two independent air channels and to suck and pump air in the space or vice versa.

The modular panel can comprise a second transversal channel to fluidly connect the second air channel and the space through the holes of the inner sheet. This transversal channel, similarly to the first transversal channel, allows to realize a plenum that allows to distribute the air in the space in an optimized manner.

The first and second pumping means can be respectively arranged in the first and second transversal channels, in this way these transversal channels work as plenums to redirect the air to and from the space. Preferably said pumping means are piezoelectric pumps that allow low energy consumption and small footprint, allowing to keep a minimal panel thickness. Alternatively, said pumping means are ionic wind blowers, thus devices that exploit the electrostatic phenomenon that occurs in the presence of electrically charged tips, due to the movement of air ions caused by the presence of charge on the tip itself.

The modular panel can comprise a third permeable structural layer and a second septum. The second septum can be coupled to the opposite side of the second permeable structural layer with respect to the first septum, while the first inner sheet and the second septum can be coupled each other through the third permeable structural layer. This third structural layer makes it possible to further strengthen the sandwich panel consisting of the various sheets, septa and permeable layers.

The modular panel can also comprise one or more thermoelectric heat pumps for emitting and absorbing heat to/from the air circulating in the first and second air channels. In this way, the panel is an air conditioning system easy to place, to cool/heat any portion of the space. Preferably the heat pumps are of a Peltier type for optimizing the size and consumptions. Being smaller, they can be optimally arranged into the panels, for globally contributing to effectively cool/heat the space.

The thermoelectric heat pumps can be arranged on the first septum so that a face of the thermoelectric heat pump faces towards the first air channel and the opposite face of the thermoelectric heat pump faces towards the second air channel. In this way, the same heat pump absorbs heat from one air channel and transfers heat to the other air channel, so as to create two flows at different temperatures in the two channels.

The first, second and third permeable structural layers and/or the inner sheet and/or the first and second septa can be made at least in part of metal to better conduct heat and to make the sandwich structure of the panel more resistant.

The panel can also comprise lighting means arranged behind the inner sheet, thus between the inner sheet and the first septum or directly over the inner sheet. In this way, the panel also allows to light the space.

The modular panels can comprise connectors arranged on the lateral side of the panel. The connectors can be shaped to engage other connectors of other panels so to form a firm but reversible connection between panels, and to form a part of said enclosure.

The connectors can be configured to fluidly and/or electrically connect the panels each other. For example, all the first air channels of the various panels can be connected through a first group of connectors, while all the second air channels of the various panels can be connected each other through a second group of connectors, so to realize between the panels two large fluid channels running parallel and isolated from each other, to provide two different air flows.

A second scope of the present invention is that of providing a vehicle, thus a transport mean, comprising a space configured to accommodate one or more persons and a plurality of modular panels according to the first scope of the present invention. Said modular panels are arranged so to form at least a part of an enclosure of said space. This vehicle can thus be closed by said modular panels for having the above advantages on a space of the mobile type.

These and other advantages will become clearer in more detail from the description, given below, of an embodiment given by way of non-limiting example with reference to the attached drawings.

### DRAWING DESCRIPTION

In the drawings:
Fig. 1 shows a schematic axonometric sectional view of a first embodiment of a modular panel according to the present invention;
Fig. 2 shows a sectional schematic side view of a second embodiment of a modular panel according to the present invention;
Fig. 3 shows a sectional schematic side view of a third embodiment of a modular panel according to the present invention in section;
Fig. 4 shows a schematic view of a space and the relative enclosure made with modular panels according to the present invention;
Fig. 5 shows a schematic view of a modular panel according to the present invention with particular reference to the interconnection system between panels;
Fig. 6 shows various schematic views of the structural layers of the modular panel.

### DETAILED DESCRIPTION

The following description of one or more embodiments of the invention refers to the attached drawings. The same numerical references in the drawings identify identical or similar elements. The object of the invention is defined by the attached claims. The technical details, structures or characteristics of the solutions described below can be combined with each other in any way.

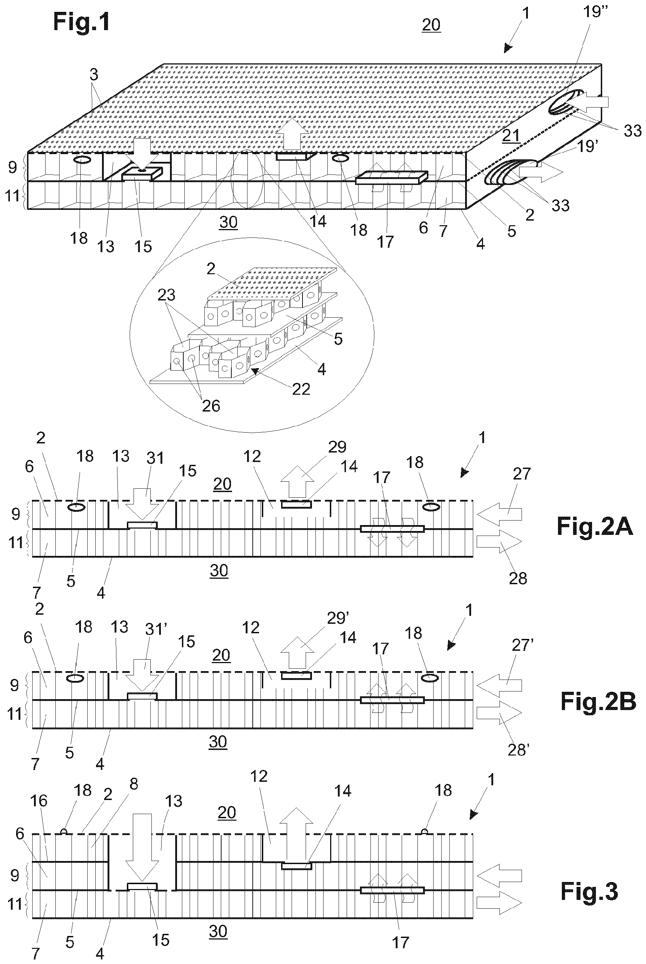

With reference to Fig. 1, a modular panel 1 is shown, sectioned transversely to its thickness to make visible its layers and the internal elements. In particular, the first embodiment of the modular panel 1 represented in Fig. 1 shows the presence of an inner sheet 2 comprising a plurality of holes 3 on the side facing the space 20 and an outer sheet 4 opposed to the inner sheet 2. The outer sheet 4 is not perforated and can vice versa comprise inside it a layer of thermal insulator (not shown) to thermally insulate the panel 1 from the external environment 30.

A first septum 5 is arranged between the inner sheet 2 and the outer sheet 4. The first septum 5 is connected to a first permeable structural layer 7. The outer sheet 4 is connected on the opposite side of the first permeable structural layer 7. Moreover, a second permeable structural layer 6 is connected on one side with the inner sheet 2 and on the opposite side with the first septum 5. Substantially, the following order of elements is realized inside the panel 1 (from top to bottom in Fig. 1): inner sheet 2, second permeable structural layer 6, first septum 5, first permeable structural layer 7, outer sheet 4.

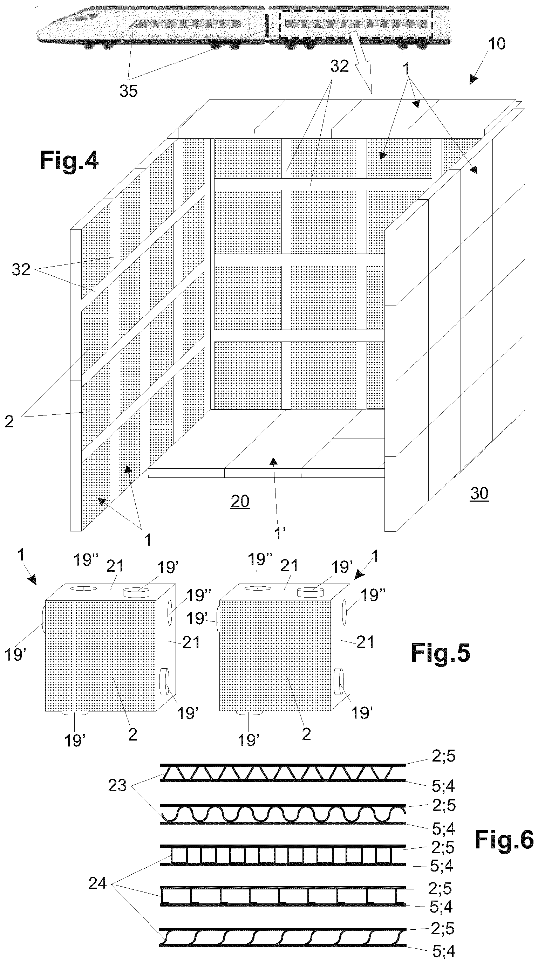

The two permeable structural layers can comprise a non-homogeneous structural material, such as a honeycomb layer 22 or a corrugated plate 23, or can comprise a plurality of transverse elements 24. Specifically, the first and second permeable structural layer 6,7, shown in the detailed figure of Fig. 1, comprise a honeycomb layer 22, having open cells 25 with an axis orthogonal to the outer sheet 4. The cells 25 comprise passage holes 26 suitable for allowing an airflow between cells 25 that is parallel to the surface of the panel 1. This type of structural layer 6,7 makes the panel 1 extremely resistant to compression forces orthogonal to the panel 1. In particular, the compressive strength of this type of structural layer 6,7 is greater in the direction orthogonal to panel 1 with respect to the compressive strength in a coplanar direction with panel 1. In alternative versions, schematized in Fig. 6, the structural permeable layer 6,7 can be a corrugated sheet 23 having a corrugated or trapezoidal profile in order to allow an airflow through the empty portions of the corrugated sheet. This type of structural layer 6,7 is cheaper than the honeycomb layer 22 although it allows air to flow parallel to the corrugation. In addition, this type of structural panel 6,7 allows a high compressive strength even along the extension of the corrugations. In a further alternative embodiment, the permeable structural layer 6,7 can comprise a plurality of transverse elements 24 spacing and connecting the sheets 2,4 and the septum 5 to each other. These transversal elements 24 can have a square, rectangular, L-shaped, S-shaped section, or other similar sections. As in the case of the corrugated plate 23, the compressive strength is optimized both orthogonally to the panel and along the extension of the transverse elements 24. Alternatively, said transverse elements 24 can be a plurality of columns extending between the sheets 2, 4 and the septum 5. In all the aforementioned versions, the inner sheet 2, the outer sheet 4 and the first septum 5 are coupled to the first and/or second permeable structural layer 6,7 in a firm and tenacious manner, so as to create a sandwich panel with high mechanical properties in compression and bending. The connection between the inner sheet 2, the outer sheet 4, the first septum 5 and the first and second permeable structural layers 6,7 can be made by gluing, welding or other known connection technique. Preferably, said connection allows heat transfer between the two connected elements.

In all the embodiments above described of the first and second permeable layer 6,7, the empty spaces of the layer 6,7 constitute respectively the first air channel 11 and the second air channel 9. The air can flow between the sheet 2 and the first septum 5, or between the sheet 4 and the first septum 5, and through the cells 25 and their passage holes 26 of the honeycomb layer 22 of Fig. 1. Similarly, the air can flow between the sheets 2,4 and the first septum 5 and along the corrugations of the corrugated plate 23 or along the transverse elements 24 of Fig. 6. These empty spaces that allow the air to flow represent the first and second air channels 11, 9.

The inner sheet 2 comprises holes 3 having a diameter between 0,2 mm and 3 mm, preferably between 0,3 mm and 0,5 mm. The sound waves coming from the space 20 pass through these holes 3 and enter the empty space behind the inner sheet 2, that is, in the empty portions of the second permeable structural layer 6. In this way, the waves remain trapped in these empty spaces and the waves are muffled. In particular, when the second layer 6 includes a honeycomb layer 22, the cells 25 in correspondence with the holes 3 of the inner sheet 2 behave like Helmholtz resonators, effectively damping the sounds coming from the space 20.

Since the first air channel 11 is separated from the inner sheet 2 by the second structural layer 6, the panel comprises a first transversal channel 13 that fluidly connects the first air channel 11 to the space 20 through the holes 3. This first transversal channel 13 extends from the first septum 5 to the inner sheet 2 and is orthogonal thereto. The walls of this first transversal channel 13 act as a plenum to direct the air from the first air channel 11 to the plurality of holes 3. The first transversal channel 13 crosses the second structural layer 6 transversely thanks to an opening made on it and it passes through the second air channel 9 without fluid exchange between them.

Preferably, said modular panel 1 comprises first and second pumping means 15,14 to circulate the air from or to the space 20 respectively in the first and second air channels 11,9. Said pumping means 15, 14 can be piezoelectric pumps or other ventilation systems with low energy consumption and reduced volume. Alternatively, the pumping means 15,14 can be so-called ion wind devices, thus capable of generating an air flow due to the movement of ions in the air. Said ionic wind device can comprise an emitter electrode and a collector electrode spaced from each other by means of an insulating element. Said first pumping means 15 are preferably configured to circulate the air in the opposite direction with respect to said second pumping means 14, so that the ambient air 20 is sucked through one air channel and pumped into the space 20 through the other air channel. Said first pumping means 15 are arranged in the first transversal channel 13, while said second pumping means 14 are arranged on said inner sheet 2 (see Fig. 1) or in a second transversal channel 13, as illustrated in Fig. 2 and clarified below.

The second embodiment of the panel illustrated in Fig. 2 differs from that of first embodiment of Fig. 1 only in that the panel 1 comprises said second transversal channel 12 that fluidly connects the second air channel 9 and the space 20 through the holes 3 of the inner sheet 2. This second transversal channel 12, which extends from the inner sheet 2 to an intermediate position of the second structural layer 6, acts as a plenum to direct the air from the second air channel 9 to a plurality of holes 3. This aspect is particularly relevant when the second pumping means 14 are arranged inside said second transversal channel 12. Said second pumping means 14 pump the air in a focused manner, and the second transversal channel 12 widens the flow thereof so to avoid that the air only transits through the holes 3 which lie in correspondence with the pumping means 14. The same occurs inside the first transversal channel 13 with the first pumping means 15. Both transversal channels 12, 13 have a cross section having a larger area than the corresponding pumping means 14, 15. The cross section of said transversal channels 12,13 can have a circular, square or any other shape useful for conveying an air flow.

In an alternative version, not shown, the pumping means 15, 14 are arranged outside the modular panel 1, and can comprise centralized pumping means configured to circulate the air respectively in the first air channels 11 and in the second air channels 9 of the various panels 1 interconnected with each other as explained below.

The third embodiment illustrated in Fig. 3 differs from the second embodiment illustrated in Fig. 2 in that it also comprises a third permeable structural layer 8 and a second septum 16. The second septum 16 is connected to the opposite side of the second permeable structural layer 6 with respect to the first septum 5 and the first inner sheet 2 and the second septum 16 are connected to each other by means of the third permeable structural layer 8. In practice, with respect to the second embodiment, the first inner sheet 2 is connected to the third permeable structural layer 8 instead of the second permeable structural layer 6 and between these two permeable structural layers 6,8 there is a second septum 16. This added portion, consisting of the third permeable structural layer 8 and the second septum 16, allows to obtain an additional layer useful for positioning lighting means 18 or for further strengthening the modular panel.
In order to refrigerate or heat the space 20, the modular panel 1 can comprise one or more thermoelectric heat pumps 17. These heat pumps are preferably of the Peltier type, due to the minimal dimensions. As shown in Fig. 1, but also in Fig. 2 and 3, said thermoelectric heat pumps 17 are arranged on the first septum 5 so that one face of the heat pump 17 faces towards the first air channel 11 and the opposite face of the heat pump 17 faces the second air channel 9. This arrangement of the heat pump 17 allows to transfer heat to one air channel and to absorb heat from the other air channel. Fig. 2 illustrates in detail the operation of the panel 1 during the hot season (Fig. 2A) and during the cold season (Fig. 2B). Specifically, during the hot season, illustrated in Fig. 2A, the incoming air 27 sucked by the second pumping means 14 through the second air channel 9 is cooled by the heat pump 17. In this way, the air pumped 29 toward the space 20 is cooled with respect to the incoming air 27. Conversely, the exhaust air 31 of the space 20 is sucked by the first pumping means 15 into the first air channel 11 and heated by the heat pump 17 which, absorbing heat from the incoming air 27, transfers the heat to the outcoming air 28. During the cold season, illustrated in Fig. 2B, the polarity of the heat pump 17 is inverted and the incoming air 27', sucked in by the seconds pumping means 14 through the second air channel 9, is heated by the heat pump 17. In this way, the air pumped 29' into the space 20 is heated with respect to the incoming air 27'. Conversely, the exhaust air 31' of the space 20 is sucked by the first pumping means 15 into the first air channel 11 and cooled by the heat pump 17 which, by absorbing heat from this airflow, transfers heat to the incoming air 27', before the outcoming air 28' is expelled from panel 1.

To improve heat transmission, said structural permeable layers 6, 7, 8 are preferably made of metal. The inner sheet 2 is also preferably made of metal. Said septa 5,16 are at least in part preferably made of metal. Specifically, said first and second septa 5,16 comprise three consecutive sub-layers, the two outermost are made of metal to improve thermal conductivity and the inner one is made of a thermal insulating material, so as to limit the heat exchange between the two air channels 9,11. Also the outer sheet 4, as previously described, can comprise inside a layer of thermal insulator to thermally insulate the panel 1 from the external environment 30. Said metal material is preferably aluminium or an alloy thereof to keep the panel 1 light.

The metallic material of the structural permeable layers 6,7,8, of the sheets 2,4 and of the septa 5,16, allows a more efficient heat transmission between the inner sheet 2 and the heat pump 17. The inner sheet 2 thus heated can irradiate the space 20 through the whole external surface of the inner sheet 2.

The modular panel 1 can comprise lights 18 arranged behind the inner sheet 2 so that part of the light generated by these lighting means 18 permeates through the holes 3 of the inner sheet 2, as illustrated in Fig. 1 and 2. Alternatively, the lighting means 18 can be small LED bulbs embedded or placed in the holes 3 of the inner sheet 2, as illustrated in Fig.3.

The modular panel 1 can comprise connectors 19', 19" arranged on the sidewalls 21 of the panel as shown in Fig. 1 and 5. The connectors 19', 19" are shaped so as to engage other connectors 19', 19" of other panels 1. Specifically, the connectors can have complementary shapes to provide a shaped coupling or a male-female coupling. For example, the connectors 19' of Fig. 1 and 5 are male and fit into the female connectors 19" to create a strong but reversible mechanical connection between panels. Each panel can include multiple connectors 19', 19" of one type and of the other type.

In particular, the connectors 19', 19" can be configured to connect the panels 1 fluidly and/or electrically. As illustrated in Fig. 1 and 5, a first group of connectors 19' connects the various first air channels 11 of the panels 1 together and a second group of connectors 19" connects the various second air channels 9 together of panels 1. In this way, a first airflow can flow through the first air channels 11 and a second airflow can flow through the second air channels 9, without leaks. For realizing this type of fluid connection, the first group of connectors 19' lies in correspondence with the first air channel 11 and the second group of connectors 19" lies in correspondence with the second air channel 9, observing the panel 1 of Fig. 1 from the side. Said connectors 19', 19" can comprise gaskets to provide a fluid sealing without leaks. Said connectors 19', 19" can also comprise electrical contacts 33 configured and arranged on the connectors 19', 19" themselves so as to make an electrical connection between panels 1. In this way, it is possible to power one of the panels powering all the others in series. Said electrical contacts 33 can comprise one or more further electrical contacts (not shown) for carrying out a data transmission between panels. In the latter case, one or more of these modular panels 1 may include a transmission antenna, for example of the wi-fi type, to allow the transmission of a data signal with the space 20.

The modular panels 1 are self-supporting and can be connected to each other. In an embodiment illustrated in Fig. 4, the modular panels 4 are connected to each other by means of a frame 32 and the panels do not include connectors 19 adapted to interconnect the various panels 1 together. In this embodiment, the connectors 19 of the various panels 1 are configured to provide a mechanical and/or fluid and/or electrical connection directly with the frame 32. The frame 32 in fact comprises inside it air channels for conveying the air of the first and second air channels 11, 9. The frame 32 also comprises electrical and data connection means for powering and digitally interconnecting the panels 1. The frame 32 also comprises hooking systems configured to cooperate with the connectors 19 of the panels 1 for realizing said enclosure 10 of said space 20.

In particular, said space 20 can be an environment of a tram or train 35, thus a transportation or a vehicle, as illustrated in Fig. 4. Said means of transport 35 can also be a people mover, a ship, a bus or a plane. This modular panel solution is particularly suitable for vehicles 35 of large dimensions for the transport of several persons and which, preferably, do not undergo high vibrations. In particular, the interior of a vehicle 35 can represent the space 20 and its walls and ceiling represent its enclosure 10. In this way the panels 1, joined together, directly or by means of a frame 32, form the enclosure 10 of the space 20 of the vehicle 35. This type of panels 1 is suitable for covering the walls and ceiling of a space 20, but also the floor, as long as the panels 1' do not have the holes 3, as illustrated in Fig. 4. The modular panels 1 of the present invention are also suitable for enclosing a space 20 of a building.

In conclusion, it is clear that the invention thus conceived is susceptible to numerous modifications or variations, all falling within the invention as defined by the claims.

## Claims

1. A modular panel (1) for realizing an enclosure (10) of a space (20) comprising:
- an inner sheet (2) facing the space (20) comprising a plurality of holes (3);
- an outer sheet (4) arranged on the opposite face of the panel (1) with respect to the inner sheet (2);
- a first septum (5) arranged between the inner and outer sheets (2,4); said outer sheet (4) and said first septum (5) being coupled each other through a first permeable structural layer (7) so to realize a first air channel (11) between the outer sheet (4) and the first septum (5); and said inner sheet (2) and said first septum (5) being coupled each other through a second permeable structural layer (6) so to realize a second air channel (9) between the inner sheet (2) and the first septum (5) fluidly connected to the ambient (20) through the holes (3) of the inner sheet (2); the first air channel (11) being isolated by the second air channel (9);
- a first transversal channel (13) fluidly connecting the first air channel (11) and the space (20) through the holes (3) of the inner sheet (2).

2. A modular panel (1) according to claim 1, further comprising:
- first pumping means (15) configured to circulate air to or from the space (20) through the first air channel (11) and the first transversal channel (13);
- second pumping means (14) configured to circulate air to or from the space (20) through the second air channel (9);
preferably said first pumping means (15) being configured to circulate the air in an opposite direction to said second pumping means (14) with respect to the space (20).

3. A modular panel (1) according to claim 1 or 2, comprising a second transversal channel (12) fluidly connecting the second air channel (9) and the space (20) through the holes (3) of the inner sheet (2).

4. A modular panel (1) according to claim 3, wherein said first and second pumping means (15,14) are respectively arranged in the first and second transversal channels (13,12), preferably said pumping means (15,14) are piezoelectric pumps or ionic wind blowers.

5. A modular panel (1) according to any of preceding claims, comprising a third permeable structural layer (8) and a second septum (16), the second septum (16) being coupled to the opposite side of the second permeable structural layer (6) with respect to the first septum (5) and the inner sheet (2) and the second septum (16) being coupled each other through the third permeable structural layer (8).

6. A modular panel (1) according to any of preceding claims, further comprising one or more thermoelectric heat pumps (17), preferably one or more Peltier heat pumps.

7. A modular panel (1) according to claim 6, wherein said one or more thermoelectric heat pumps (17) are arranged on the first septum (5) so that a face of the thermoelectric heat pump (17) faces towards the first air channel (11) and an opposite face of the thermoelectric heat pump (17) faces towards the second air channel (9).

8. A modular panel (1) according to any of preceding claims, wherein one or more of the following elements is at least in part made of metal: said permeable structural layers (6,7,8); said sheets (2,4); said septa (5,16).

9. A modular panel (1) according to any of preceding claims, further comprising lighting means (18) arranged behind or over the inner sheet (2).

10. A modular panel (1) according to any of preceding claims, comprising connectors (19',19") arranged on the lateral side (21) of the panel (1) shaped to engage other connectors of one or more other panels (10) so to form a part of said enclosure (10).

11. A modular panel (1) according to claim 10, wherein said connectors (19', 19") are configured to fluidly and/or electrically connect said panels (1) each other, preferably said first air channels (11) of said panels (1) are connected through a first group of connectors (19') and said second air channels (9) of said panels (1) are connected through a second group of connectors (19").

12. Vehicle (35) comprising a space (20) configured to accommodate one or more persons and a plurality of modular panels (1) according to any one of preceding claims arranged so to form at least a part of an enclosure (10) of said space (20).

## Patentansprüche

1. Modulares Paneel (1) zur Herstellung einer Zaun (10) eines Raumes (20), umfassend:
- eine dem Raum (20) zugewandte Innenschicht (2), die eine Vielzahl von Löchern (3) aufweist;
- ein Außenschicht (4), das auf der gegenüberliegenden Seite des Paneels (1) in Bezug auf das Innenblech (2) angeordnet ist;
- ein erstes Septum (5), das zwischen der Innen- und der Außenschicht (2, 4) angeordnet ist; wobei die Außenschicht (4) und die erste Septum (5) durch eine erste durchlässige Strukturschicht (7) miteinander verbunden sind, um einen ersten Luftkanal (11) zwischen der Außenschicht (4) und der ersten Septum (5) bereitzustellen; und wobei die Innenschicht (2) und die erste Septum (5) durch eine zweite durchlässige Strukturschicht (6) miteinander verbunden sind, um einen zweiten Luftkanal (9) zwischen der Innenschicht (2) und der ersten Septum (5) bereitzustellen Fluidverbindung mit dem raumes (20) durch die Löcher (3) des Innenschicht (2); wobei der erste Luftkanal (11) durch den zweiten Luftkanal (9) isoliert ist;
- einen ersten Querkanal (13), der den ersten Luftkanal (11) und den Raum (20) durch die Löcher (3) des Innenblechs (2) strömungstechnisch verbindet.

2. Modulares Paneel (1) nach Anspruch 1, weiterhin umfassend:
- erste Pumpmittel (15), die so konfiguriert sind, dass sie Luft durch den ersten Luftkanal (11) und den ersten Querkanal (13) zum oder vom Raum (20) zirkulieren lassen;
- zweite Pumpmittel (14), die so konfiguriert sind, dass sie Luft durch den zweiten Luftkanal (9) zum oder vom Raum (20) zirkulieren lassen; vorzugsweise ist das erste Pumpmittel (15) so konfiguriert, dass es Luft in einer Richtung zirkulieren lässt, die dem zweiten Pumpmittel (14) in Bezug auf den Raum (20) entgegengesetzt ist.

3. Modulares Paneel (1) nach Anspruch 1 oder 2, umfassend einen zweiten Querkanal (12), der den zweiten Luftkanal (9) und den Raum (20) durch die Löcher (3) des Innenschicht (2) strömungstechnisch verbindet.

4. Modulares Paneel (1) nach Anspruch 3, wobei die ersten und zweiten Pumpmittel (15, 14) jeweils in den ersten und zweiten Querkanälen (13, 12) angeordnet sind, vorzugsweise handelt es sich bei den Pumpmitteln (15, 14) um piezoelektrische Pumpen oder lonenwindgebläse.

5. Modulares Paneel (1) nach einem der vorhergehenden Ansprüche, umfassend eine dritte durchlässige Strukturschicht (8) und ein zweites Septum (16), wobei das zweite Septum (16) mit der gegenüberliegenden Seite der zweiten durchlässigen Strukturschicht verbunden ist (6) in Bezug auf das erste Septum (5); und die Innenschicht (2) und das zweite Septum (16) sind durch die dritte durchlässige Strukturschicht (8) miteinander verbunden.

6. Modulares Paneel (1) nach einem der vorhergehenden Ansprüche, weiterhin umfassend eine oder mehrere thermoelektrische Wärmepumpen (17), vorzugsweise eine oder mehrere Peltier-Wärmepumpen.

7. Modulares Paneel (1) nach Anspruch 6, wobei die eine oder mehreren thermoelektrischen Wärmepumpen (17) auf dem ersten Septum (5) so angeordnet sind, dass eine Seite der thermoelektrischen Wärmepumpe (17) dem ersten Luftkanal zugewandt ist (11) und eine gegenüberliegende Seite der thermoelektrischen Wärmepumpe (17) dem zweiten Luftkanal (9) zugewandt ist.

8. Modulares Paneel (1) nach einem der vorhergehenden Ansprüche, wobei eines oder mehrere der folgenden Elemente zumindest teilweise aus Metall bestehen: die durchlässigen Strukturschichten (6, 7, 8); besagte Blätter (2, 4); besagte Septen (5, 16).

9. Modulares Paneel (1) nach einem der vorhergehenden Ansprüche, weiterhin umfassend Beleuchtungsmittel (18), die hinter oder über der Innenschicht (2) angeordnet sind.

10. Modulares Paneel (1) nach einem der vorhergehenden Ansprüche, das Verbinder (19', 19") umfasst, die an der seitlichen Seite (21) des Paneels (1) angeordnet und so geformt sind, dass sie mit anderen Verbindern von einem oder mehreren in Eingriff kommen andere zaun (10) um einen Teil des Gehäuses (10) zu bilden.

11. Modulares Paneel (1) nach Anspruch 10, wobei die Anschlüsse (19', 19") dazu konfiguriert sind, die Paneele (1) miteinander, vorzugsweise sind die ersten Luftkanäle (11) der Paneele (1) über eine erste Gruppe von Steckverbindern (19') und die zweiten Luftkanäle (9) der Paneele (1) über eine zweite Gruppe von Steckverbindern (19") verbunden.

12. Fahrzeug (35), umfassend einen Raum (20), der für die Unterbringung einer oder mehrerer Personen ausgelegt ist, und mehrere modulare Paneele (1) nach einem der vorhergehenden Ansprüche, die so angeordnet sind, dass sie zumindest einen Teil eines Zauns (10) des Raums (20) bilden.

## Revendications

1. Panneau modulaire (1) pour réaliser une clôture (10) d'un espace (20) comprenant :
- une feuille interne (2) faisant face à l'espace (20) comprenant une pluralité de trous (3) ;
- une feuille externe (4) disposée sur la face opposée du panneau (1) par rapport à la feuille interne (2) ;
- un premier septum (5) disposée entre les feuilles interne et externe (2,4) ; ladite feuille externe (4) et ledit premier septum (5) étant couplés l'un à l'autre à travers une première couche structurelle perméable (7) afin de réaliser un premier canal d'air (11) entre la feuille externe (4) et le premier septum (5) ; et ladite feuille interne (2) et ledit premier septum (5) étant couplés l'un à l'autre à travers une seconde couche structurelle perméable (6) afin de réaliser un second canal d'air (9) entre la feuille interne (2) et le premier septum (5) en communication fluidique avec l'air espace (20) à travers les trous (3) de la feuille interne (2) ; le premier canal d'air (11) étant isolé par le second canal d'air (9) ;
- un premier canal transversal (13) reliant fluidiquement le premier canal d'air (11) et l'espace (20) à travers les trous (3) de la feuille interne (2).

2. Panneau modulaire (1) selon la revendication 1, comprenant en outre:
- premiers moyens de pompage (15) configuré pour faire circuler de l'air vers ou depuis l'espace (20) à travers le premier canal d'air (11) et le premier canal transversal (13);
- seconds moyens de pompage (14) configuré pour faire circuler de l'air vers ou depuis l'espace (20) à travers le second canal d'air (9);
de préférence lesdits premiers moyens de pompage (15) étant configurés pour faire circuler l'air dans une direction opposée auxdits seconds moyens de pompage (14) par rapport à l'espace (20).

3. Panneau modulaire (1) selon la revendication 1 ou 2, comprenant un second canal transversal (12) reliant fluidiquement le second canal d'air (9) et l'espace (20) à travers les trous (3) de la feuille interne (2).

4. Panneau modulaire (1) selon la revendication 3, dans lequel lesdits premiers et seconds moyens de pompage (15,14) sont respectivement disposés dans les premier et second canaux transversaux (13,12), de préférence lesdits moyens de pompage (15,14) sont des pompes piézoélectriques ou des générateurs de vent ionique.

5. Panneau modulaire (1) selon l'une quelconque des revendications précédentes, comprenant une troisième couche structurelle perméable (8) et un second septum (16), le second septum (16) étant couplé au côté opposé de la second couche structurelle perméable (6) par rapport au premier septum (5) et la feuille interne (2) et le second septum (16) étant couplés l'un à l'autre à travers la troisième couche structurelle perméable (8).

6. Panneau modulaire (1) selon l'une quelconque des revendications précédentes, comprenant en outre une ou plusieurs pompes à chaleur thermoélectriques (17), de préférence une ou plusieurs pompes à chaleur Peltier.

7. Panneau modulaire (1) selon la revendication 6, dans lequel lesdites une ou plusieurs pompes à chaleur thermoélectriques (17) sont disposées sur le premier septum (5) de sorte qu'une face de la pompe à chaleur thermoélectrique (17) soit tournée vers le premier air canal (11) et une face opposée de la pompe à chaleur thermoélectrique (17) est tournée vers le second canal d'air (9).

8. Panneau modulaire (1) selon l'une quelconque des revendications précédentes, dans lequel un ou plusieurs des éléments suivants sont au moins en partie en métal: lesdites couches structurelles perméables (6, 7, 8) ; lesdites feuilles (2, 4); lesdits septa (5, 16).

9. Panneau modulaire (1) selon l'une quelconque des revendications précédentes, comprenant en outre des moyens d'éclairage (18) disposés derrière ou au-dessus de la feuille interne (2).

10. Panneau modulaire (1) selon l'une quelconque des revendications précédentes, comprenant des connecteurs (19', 19") disposé sur le côté latéral (21) du panneau (1) conformé pour engager d'autres connecteurs d'un ou plusieurs autres panneaux (1) afin de former une partie de ladite clôture (10).

11. Panneau modulaire (1) selon la revendication 10, dans lequel lesdits connecteurs (19', 19") sont configurés pour connecter fluidiquement et/ou électriquement lesdits panneaux (1) entre eux, de préférence lesdits premiers canaux d'air (11) de lesdits panneaux (1) sont reliés par un premier groupe de connecteurs (19') et lesdits seconds canaux d'air (9) desdits panneaux (1) sont reliés par un second groupe de connecteurs (19").

12. Véhicule (35) comprenant un espace (20) configuré pour accueillir une ou plusieurs personnes et une pluralité de panneaux modulaires (1) selon l'une quelconque des revendications précédentes agencés pour former au moins une partie d'une clôture (10) de ledit espace (20).
